# EUROPÄISCHE PATENTSCHRIFT

(11) **EP 1 128 083 B1**
(45) Veröffentlichungstag und Bekanntmachung des Hinweises auf die Patenterteilung: **15.09.2004**
(21) Anmeldenummer: 01102166.4
(22) Anmeldetag: 02.02.2001
(51) Int. Cl.: F16D 65/12

(54) **Verfahren zur Herstellung einer Bremsscheibe**
Method for manufacturing a brake disc
Procédé de fabrication d'un disque de frein

(30) Priorität: 23.02.2000 DE 10008187
(43) Veröffentlichungstag der Anmeldung: 29.08.2001
(73) Patentinhaber: Bayerische Motoren Werke Aktiengesellschaft, 80809 München (DE)
(72) Erfinder: Spörer, Josef, Dr., 84072 Reichertshausen (DE); Stimpel, Herbert, 82008 Unterhaching (DE); Götz, Josef, 84160 Frontenhausen (DE); Kirmse, Stefan, 82541 Münsing (DE); Blechinger, Gerd, 81927 München (DE)

(56) Entgegenhaltungen:
- EP-A- 0 028 393
- EP-A- 0 177 672
- EP-A- 0 726 406
- WO-A-95/30841
- DE-A- 2 033 033
- DE-A- 2 263 643
- DE-A- 3 130 794
- PATENT ABSTRACTS OF JAPAN vol. 017, no. 222 (M-1404), 7. Mai 1993 (1993-05-07) -& JP 04 356322 A (SHOWA ALUM CORP), 10. Dezember 1992 (1992-12-10)

## Beschreibung

Die Erfindung betrifft ein Verfahren zur Herstellung einer einen Reibring und einen Bremsscheibentopf aufweisenden Bremsscheibe für ein Kraftfahrzeug nach dem Oberbegriff des Anspruchs 1.

Aus der EP 0 403 799 A2 ist eine Bremsscheibe bekannt, von deren Bremsscheibentopf ein Tragring absteht, in dessen Vertiefungen die Stege zwischen den beiden Reibringen verschieblich eingreifen, so dass bei unterschiedlichen Temperaturdehnungen zwischen Reibring und Bremsscheibentopf ein Ausgleich in radialer Richtung erfolgen kann. Der Tragring des Bremsscheibentopfes und der Reibring werden durch Verbundgießen miteinander verbunden.

Aus der DE 22 63 643 A ist ein Herstellverfahren nach dem Oberbegriff des Anspruchs 1 bekannt, mit dem Einzelteile einer Bremsscheibe, deren Topf und Reibring aus unterschiedlichen Gussmaterialien bestehen, günstig miteinander verbunden werden können, und zwar mittels eines dort sog. Trennkernes. Etwas ähnliches zeigt die EP 0 726 406 A1.

Aufgabe der Erfindung ist es, ein weiteres Verfahren zur Herstellung einer Bremsscheibe für ein Kraftfahrzeug aufzuzeigen.
Diese Aufgabe wird durch die Merkmale des Anspruchs 1 gelöst.

Durch das erfindungsgemäße Verfahren können grundsätzlich Reibringe und Bremsscheibentöpfe aus unterschiedlichen Materialien miteinander verbunden werden, ohne auf ein bestimmtes Herstellverfahren, wie beispielsweise das Verbundgussverfahren, eingeschränkt zu sein. Somit kann beispielsweise ein Reibring aus dem Gusswerkstoff GG-15 mit einem Bremsscheibentopf aus einer Aluminiumlegierung in vorteilhafter Weise verbunden werden. Auch ergeben sich im Vergleich zu Verfahren, bei denen der Reibring über separate Verbindungselemente, beispielsweise Stifte, Schrauben etc. an den Bremsscheibentopf angebunden ist, Kosten- und Montagevorteile. Das in den Reibring eingegossene Verbindungselement kann nämlich auf besonders sichere und gleichzeitig kostengünstige Weise über Reibschweißverfahren an den Bremsscheibentopf angebunden werden.

Durch die Weiterbildung der Erfindung nach Anspruch 2, insbesondere in Verbindung mit Anspruch 3, wird eine "schwimmende" Anbindung des Reibringes an den Bremsscheibentopf ermöglicht. Durch die zapfenartigen Abschnitte kann einerseits in Umfangsrichtung ein Bremsmoment übertragen werden, andererseits ist der Reibring sowohl axial geführt als auch radial beweglich. Damit können unterschiedliche Wärmedehnungen zwischen Reibring und Bremsscheibentopf ausgeglichen werden, ohne dass es zu Wärmespannungen oder Verformungen des Reibrings kommt (Schirmung).

Das Verbindungselement kann in einfacher Weise beispielsweise aus einem Blechmaterial ausgestanzt werden und ist somit mit geringen Kosten herstellbar. Weisen die zapfenförmigen Abschnitte in Umfangsrichtung zueinander parallele Flanken auf, wird bei unterschiedlichen Wärmedehnungen von Bremsscheibentopf und Reibring eine Verschiebung der Flanken der zapfenförmigen Abschnitte innerhalb des Reibringes in jedem Fall ermöglicht ohne dass dabei Spiel in Umfangsrichtung entsteht.

Ein mögliches Ausführungsbeispiel der Erfindung ist in der Zeichnung dargestellt und wird nachfolgend näher erläutert. Es zeigt:
- Figur 1: eine erfindungsgemäß hergestellte Bremsscheibe in der Seitenansicht,
- Figur 2: einen Schnitt entlang der Schnittverlaufslinie II-II in Figur 1,
- Figur 3: eine vergrößerte Schnittdarstellung entlang der Schnittverlaufslinie III-III in Fig. 1,
- Figur 4: eine Seitenansicht des Verbindungselementes und

Eine in ihrer Gesamtheit mit 1 bezeichnete Bremsscheibe besteht aus einem Reibring 2 mit einem äußeren sowie einem inneren Reibringabschnitt 4 bzw. 5 sowie einem Bremsscheibentopf 3. Die beiden Abschnitte 4 und 5 sind über Stege 6 miteinander verbunden. Der Bremsscheibentopf 3 weist einen parallel zum Reibring 2 verlaufenden Boden 7 sowie senkrecht hiervon abstehende Wandbereiche 8 auf, die in einem freien Endabschnitt 9 enden.

Zur Verbindung von Reibring 2 und Bremsscheibentopf 3 ist ein Verbindungselement 20 vorgesehen, das im wesentlichen ringscheibenförmig ist und aus einem radial innenliegenden, umlaufenden Ringabschnitt 21 sowie einem Abschnitt 22 mit zapfenförmig radial nach außen abstehenden Elementen 23 besteht. Das Verbindungselement 20 besteht bevorzugt aus einem Blechmaterial und wird in einfacher Weise durch ein Stanzverfahren hergestellt, durch das ohne zusätzliche Bearbeitungsschritte die Endkontur des Verbindungselementes 20 erreicht wird. Beim Gießen des Reibringes 2 wird das Verbindungselement 20 mit seinen zapfenförmigen Elementen 23 in den radial innenliegenden freien Endabschnitt des äußeren Reibringabschnittes 4 mit eingegossen. Der nicht vom Gussmaterial des Reibringabschnittes 4 eingefasste radial innenliegende Ringabschnitt 21 des Verbindungselementes 20 dient als Verbindungsflansch zum Bremsscheibentopf 3. Die Verbindung zwischen den freien Endabschnitten 9 der Wand 8 des Bremsscheibentopfes 3 und dem Ringabschnitt 21 erfolgt durch Reibschweißen. Zum Reibschweißen wird beispielsweise bei feststehendem Bremsscheibentopf 3 der Reibring 2 und damit das eingegossene Verbindungselement 20 in Rotation versetzt.

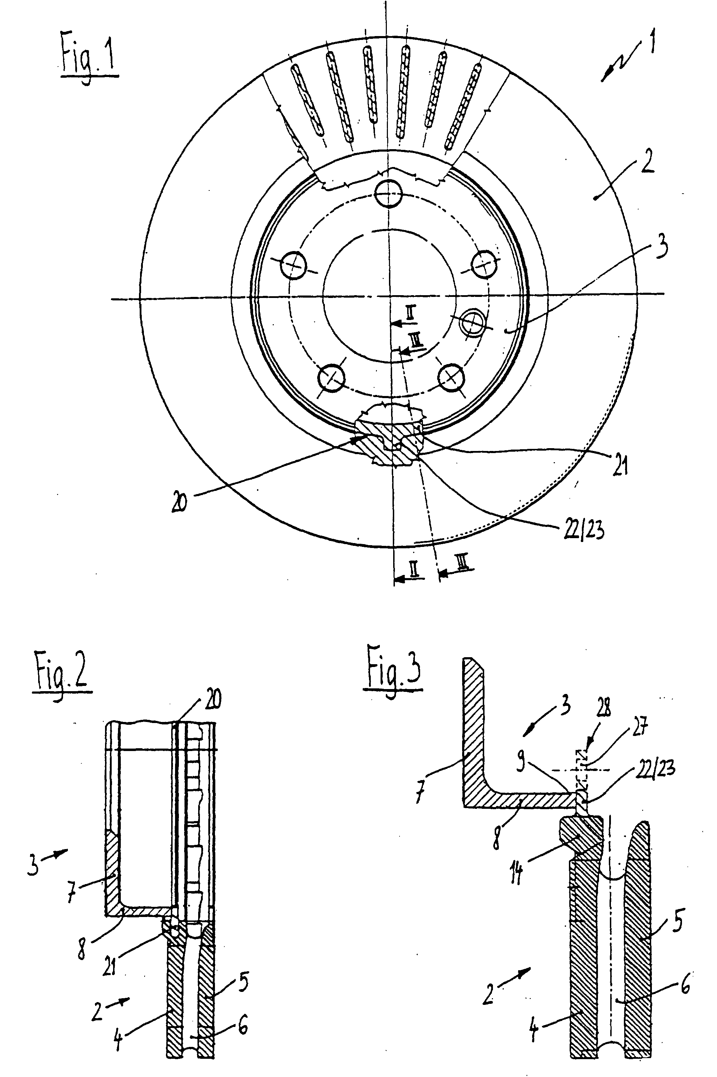

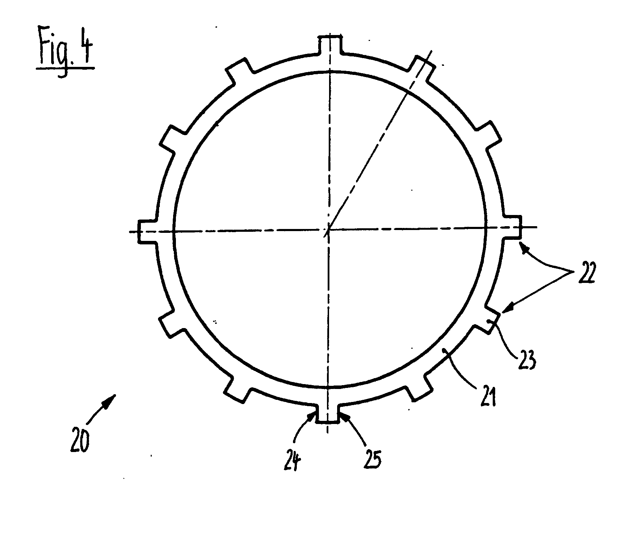

In vorteilhafter Ausgestaltung der Erfindung erfolgt der Antrieb des Verbindungselementes 20 nicht über den Reibring 2, sondern direkt über Mitnehmer 27 an der Innenseite des Ringabschnitts 21, wie in Figur 3 mit strichlierten Linien dargestellt. Diese Mitnehmer 27 werden beispielsweise von kreisförmigen Aussparungen in einer innenseitigen einstückigen Fortsetzung 28 des Ringabschnittes 21 gebildet. Nach erfolgter Reibschweißung wird die innenseitige Fortsetzung 28 durch spanende Bearbeitung entfernt. Durch den direkten Antrieb des Verbindungselements 20 wird eine Überlastung und damit Vorschädigung der Gussverbindung zwischen dem Reibringabschnitt 4 und dem Verbindungselement 20 ausgeschlossen. Zudem kann die Gussverbindung alleine auf das zu übertragende Bremsmoment ausgelegt werden.

Vor dem Eingießen der zapfenförmigen Elemente 23 in den Endabschnitt 14 des äußeren Reibringabschnittes 4 werden die zapfenförmigen Elemente 23 mit einem Trennmittel, wie beispielsweise "keramischer Schlichte", beschichtet, so dass zwischen den zapfenförmigen Elementen 23 und dem Gusswerkstoff des Reibringabschnittes 4 keine stoffschlüssige Verbindung erfolgt. Bei unterschiedlichen Wärmedehnungen von Reibring 2 und Bremsscheibentopf 3 kann der äußere Reibringabschnitt 4 auf den zapfenförmigen Elementen 23 gleiten, so dass Wärmespannungen vermieden werden.

Wie Versuche der Anmelderin gezeigt haben, kann je nach den verwendeten Materialien auf den Einsatz einer Schlichte verzichtet werden, ohne dass während des Gießvorgangs eine stoffschlüssige Verbindung erfolgt. Durch den Einsatz eines Trennmittels bzw. den Verzicht darauf kann jedoch das Passungsspiel zwischen den zapfenförmigen Elementen 23 und dem Gusswerkstoff des Reibringabschnitts 4 beeinflusst werden. Mit Trennmittel stellt sich tendeziell eine Spielpassung ein, während bei Verzicht auf ein Trennmittel eher eine Presspassung erreicht wird. Außerdem stellt die Beschichtung durch eine keramische Schlichte einen Korrosionsschutz dar, der die Passungsspalte erhält und einen Verschleißschutz darstellt.

Um eine in Umfangsrichtung spielfreie Führung zwischen Reibring 2 und Bremsscheibentopf 3 zu erreichen, sind die Flanken 24 und 25 an den zapfenförmigen, in der Seitenansicht rechteckförmigen Elementen 23 in beiden Umfangsrichtungen parallel zueinander ausgeführt.

Bevorzugt wird der Reibring 2 aus Grauguss, beispielsweise GG-15, hergestellt. Als Material für den Bremsscheibentopf bietet sich aus Gewichtsgründen eine Aluminiumlegierung an. Soll die Innenfläche des Bremsscheibentopfes 3 als Funktionsfläche für eine als Trommelbremse ausgeführte Feststellbremse verwendet werden, kann als Material für den Bremsscheibentopf auch partikelverstärktes Al/MMC verwendet werden, das in der Regel ca. 20 bis 30 % SiC-Partikel enthält. Voraussetzung ist hierbei allerdings, dass das eingesetzte Material reibschweißgeeignet ist.

Selbstverständlich kann der Reibring 2 auch aus anderen Materialien als GG bestehen, z. B. auch aus SiC.

## Patentansprüche

1. Verfahren zur Herstellung einer einen Reibring und einen Bremsscheibentopf aufweisenden Bremsscheibe für ein Kraftfahrzeug, mit den Schritten
a) Gießen des Reibringes (2), wobei ein ringscheibenförmiges Verbindungselement (20) so in den Reibring (2) mit eingegossen wird, dass ein radial außenliegender Abschnitt (22) des Verbindungselementes (20) in den radial innenliegenden Bereich (14) des Reibringes (2) eingegossen wird, während der radial innenliegende Abschnitt (21) des Verbindungselementes (20) vom Gusswerkstoff des Reibringes (2) frei bleibt
b) Verbinden von Verbindungselement (20) und Bremsscheibentopf (3) entlang des radial innenliegenden Abschnittes (21) des Verbindungselementes (20),
**dadurch gekennzeichnet, dass** der radial innenliegende Abschnitt (21) des Verbindungselementes (20) geschlossen umlaufend ist und die Verbindung zwischen dem radial innenliegenden Abschnitt (21) des Verbindungselementes (20) und dem Bremsscheibentopf (3) durch Reibschweißen erfolgt.

2. Verfahren nach Anspruch 1,
**dadurch gekennzeichnet, dass** der radial außenliegende Abschnitt (22) des Verbindungselementes (20) von nach außen abstehenden zapfenförmigen Elementen (23) gebildet wird., die in beiden Umfangsrichtungen parallel zueinander ausgeführte Flanken (24, 25) aufweisen.

3. Verfahren nach einem der vorgenannten Ansprüche,
**dadurch gekennzeichnet, dass** vor dem Eingießen des Verbindungselementes (20) in den Reibring (2) ein Trennmittel auf das Verbindungselement (20) aufgebracht wird.

4. Verfahren nach einem der vorgenannten Ansprüche,
**dadurch gekennzeichnet, dass** die Einleitung eines Reibschweißmomentes durch eine Einrichtung (27, 28) am radial innenliegenden Abschnitt (21) des Verbindungselementes (20) erfolgt, wobei die Einrichtung (27, 28) nach erfolgter Reibschweißung entfernt wird.

## Claims

1. A method of producing a brake disc comprising a friction ring and a brake-disc top, for a motor vehicle, in the following steps:
a) casting the friction ring (2), wherein a disc-shaped connecting element (20) is so integrally cast in the friction ring (2) that a radially outer portion (22) of the connecting element (20) is integrally cast in the radially inner region (14) of the friction ring (2), whereas the radially inner portion (21) of the connecting element (20) remains free from the cast material forming the friction ring (2) and
b) connecting the element (20) and the top (3) along the radially inner portion (21) of the connecting element (20),
**characterised in that** the radially inner portion (21) of the connecting element (20) has a continuous periphery, and the connection between the brake-disc top (3) and the radially inner portion (21) of the connecting element (2) is made by friction welding.

2. A method according to claim 1, **characterised in that** the radially outer portion (22) of the connecting element (20) is in the form of outwardly projecting peg-like elements (23) which have flanks (24, 25) parallel to one another in both peripheral directions.

3. A method according to any of the preceding claims, **characterised in that** a parting agent is applied to the connecting element (20) before the element (20) is integrally cast in the friction ring (2).

4. A method according to any of the preceding claims, **characterised in that** a friction welding torque is applied by a device (27,28) to the radially inner portions (21) of the connecting element (20), wherein the device (27, 28) is removed after the friction welding.

## Revendications

1. Procédé de fabrication d'un disque de frein présentant une rondelle de frottement et un pot de disque de frein pour un véhicule automobile, comprenant les étapes consistant à :
a) couler la rondelle de frottement (2), un élément de raccordement (20) en forme de couronne étant coulé dans la rondelle de frottement (2) de telle sorte qu'une partie (22) de l'élément de raccordement (20) s'étendant radialement à l'extérieur soit coulée dans la région (14) de la rondelle de frottement (2) s'étendant radialement à l'intérieur tandis que la partie (21) de l'élément de raccordement (20) s'étendant radialement à l'intérieur n'est pas touchée par le matériau coulé de la rondelle de frottement (2)
b) relier l'élément de raccordement (20) et le pot de disque de frein (3) le long de la partie (21) de l'élément de raccordement (20) s'étendant radialement à l'intérieur,
**caractérisé en ce que**
la partie (21) de l'élément de raccordement (20) s'étendant radialement à l'intérieur est fermée circonférentiellement et la liaison entre la partie (21) de l'élément de raccordement (20) s'étendant radialement à l'intérieur et le pot de disque de frein (3) est réalisée par soudure par friction.

2. Procédé selon la revendication 1,
**caractérisé en ce que**
la partie (22) de l'élément de raccordement (20) s'étendant radialement à l'extérieur est formée d'éléments en forme de tenon (23) dépassant vers l'extérieur qui présentent des flancs (24, 25) réalisés parallèlement les uns aux autres dans les deux directions de la circonférence.

3. Procédé selon l'une des revendications précédentes,
**caractérisé en ce que**
avant de couler l'élément de raccordement (20) dans la rondelle de frottement (2), un agent séparateur est déposé sur l'élément de raccordement (20).

4. Procédé selon l'une des revendications précédentes,
**caractérisé en ce que**
la mise en oeuvre d'un couple de soudure par friction sur la partie (21) de l'élément de raccordement (20) s'étendant radialement à l'intérieur est réalisée au moyen d'un dispositif (27, 28) qui est enlevé une fois la soudure de l'alésage effectuée.
